# EUROPEAN PATENT APPLICATION

(11) **EP 2 958 294 A1**
(43) Date of publication of application: **23.12.2015**
(21) Application number: 14305914.5
(22) Date of filing: 16.06.2014
(51) Int. Cl.: H04L 29/06, H04L 29/08

(54) **Method for operating a network equipment arranged along a transmission path between a client terminal and at least one server, and corresponding network equipment.**

(71) Applicant: Thomson Licensing, 92130 Issy-les-Moulineaux (FR)
(72) Inventor: Taibi, Charline, 35 576 Cesson Sévigné (FR); Houdaille, Remi, 35 576 Cesson Sévigné (FR); Gouache, Stephane, 35 576 Cesson Sévigné (FR)
(74) Representative: Browaeys, Jean-Philippe

(57) **Abstract**

Network equipment (GW) arranged along a transmission path between a client terminal and at least one server, said network equipment being configured to receive a request from the client terminal for a first representation of a segment of a multimedia content available at several representations, said request further specifying one or several alternative representations of said segment, which comprises a bandwidth estimator (14) configured to determine at least one downstream bandwidth along a transmission path between a server and the client terminal, a filtering module (16) configured to modify said request by removing each alternative representation of the request whose associated bitrate is higher than the sum of the determined downstream bandwidth and a threshold, and a communication module (11) configured to forward the modified request to an upstream network element arranged between the network equipment (GW) and the server.

## Description

### TECHNICAL FIELD

The present invention relates generally to the domain of the adaptive streaming technology over, for instance but not exclusively, HTTP (HyperText Transfer Protocol) and, in particular, to the operation of a network equipment (such as a gateway or a cache) arranged along the transmission path between client terminal and remote servers.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Adaptive streaming over HTTP (also called multi-bitrate switching or HAS) is quickly becoming a major technology for multimedia content distribution. Among the HTTP adaptive streaming protocols which are already used, the most famous are the HTTP Live Streaming (HLS) from Apple, the Silverlight Smooth Streaming (SSS) from Microsoft, the Adobe Dynamic Streaming (ADS) from Adobe, the Dynamic Adaptive Streaming over HTTP (DASH) developed by 3GPP and MPEG (standardized as ISO/IEC 23009-1:2012).

When a client terminal wishes to play an audiovisual content (or A/V content) in adaptive streaming, it first has to get a file describing how this A/V content might be obtained. This is generally done through the HTTP protocol by getting a description file, so-called manifest, from an URL (Uniform Resource Locator), but can be also achieved by other means (e.g. broadcast, e-mail, SMS and so on). The manifest - generated in advance and delivered to the client terminal by a remote server - basically lists the available representations (also called instances or versions) of such an A/V content (in terms of bitrate, resolution and other properties). A representation is associated with a given quality level (bitrate).

The whole data stream of each representation is divided into segments (also called chunks) of equal duration (accessible by a separate URL) which are made such that a client terminal may smoothly switch from one quality level to another between two segments. As a result, the video quality may vary while playing but rarely suffers from interruptions (also called freezes).

At the client side, the segments are selected based on a measure of the available bandwidth of the transmission path. In particular, a client terminal usually requests the representation of a segment corresponding to a bitrate encoding and thus a quality compliant with the measured bandwidth.

When a cache is along the transmission path between a client terminal and a remote server, one representation of a given segment may already be stored in said cache, in case another client has previously requested the same segment with the same representation or in case a Content Delivery Network (CDN) has already provisioned the segment in the cache. Thus, the response to an HTTP request for said given segment is faster than if the segment comes from the remote server and duplicate transmission can be avoided, effectively saving network resources.

Nevertheless, the HTTP adaptive streaming appears not to be cache friendly (or at least less cache friendly than the so called layered base switching as for instance H264-SVC). Indeed, if a first client terminal requests a representation r of a given segment and a second client terminal - sharing a part of the transmission path with said first client terminal and a cache - requests a representation of said given segment (at a higher or lower quality), then the cache is not hit leading to higher load on the network segment between the cache and the server with the risk of causing congestion. The benefits of caching are then completely annihilated and caches are currently unable to improve this situation.

To overcome this shortcoming, it is known that a client terminal may send a request for a given segment comprising a first (also called preferred) representation and one or several alternative representations. When such a request arrives at an HAS aware cache (meaning that said cache is compliant with an HAS protocol, such as MPEG-DASH), said cache delivers the first representation if cached or browses the alternative representations in case the first representation is not cached. When one of the alternative representations is cached, the cache sends said alternative representation to the client terminal. When none of the first and alternative representations of the request is cached, the request is forwarded upstream.

Nevertheless, when an alternative representation of the request is cached and sent to the client terminal without any bandwidth consideration, when said alternative representation is associated with a higher bitrate than the one of the first representation, nothing can assure that the link between the cache and the client terminal has sufficient bandwidth. Indeed, as mentioned above, the client terminal makes an estimation of the downstream bandwidth between the server and itself before selecting the first requested representation. But for the alternative representations, it may request representations with higher bitrates than its bandwidth estimation for several reasons, among others:
- when the alternative representation is in a cache, it can be delivered faster than a representation of the segment coming from the server;
- when the alternative representation is in a cache located in a residential gateway, the network link limiting the bandwidth may not be the link between the gateway and the client terminal (e.g. ISP network on ADSL vs. home network on Ethernet or WiFi), so that the available bandwidth between said cache and the client terminal is higher than the estimated bandwidth.

When the bandwidth is not enough, the client terminal may receive the segment too late. As a consequence, the buffer of the client terminal may decrease and an important delay of reception can lead to a buffer underflow.

In addition, when none of the first and alternative representations of the request is cached, the request is then forwarded upstream without any bandwidth consideration, so that the use of the network resources might not be optimum, especially when a bottleneck is located between the considered cache and a further network equipment (e.g. a cache, a server, etc.).

The present invention overcomes at least the above mentioned shortcomings.

### SUMMARY

The invention concerns a method for operating a network equipment arranged along a transmission path between a client terminal and at least one server, said network equipment being configured to receive a request from the client terminal for a first representation of a segment of a multimedia content available at several representations, said request further specifying one or several alternative representations of said segment, which is remarkable in that it comprises:
- determining at least one downstream bandwidth along a transmission path between a server and the client terminal;
- modifying said request by removing each alternative representation specified in the request whose associated bitrate is higher than the sum of the determined downstream bandwidth and a threshold;
- forwarding the modified request to an upstream network element arranged between the network equipment and the server.

Thus, the present invention can prevent from delivering - by a cache (for instance configured to deal with a request specifying one preferred representation of a segment and alternative representations to deliver in case the preferred representation is not cached) to the client terminal - a response with an alternative representation which may not be delivered in time due to a low downstream bandwidth. This may improve the user experience (especially when the downstream bandwidth is tight) by avoiding, or at least reducing, the change of representation between successive segments.

In an aspect of the present invention, the downstream bandwidth can be determined along a transmission path between said upstream network element and the network equipment.

As a variant or as a complement, the downstream bandwidth can be determined along a transmission path between the network equipment and a downstream network element arranged between the client terminal and said network equipment.

In addition, the network equipment may be a gateway, a proxy or a cache.

Moreover, when the protocol used for the transmission of the multimedia content to the client terminal is an HTTP adaptive streaming protocol, the network equipment is compliant with said HTTP adaptive streaming protocol.

The present invention also concerns a network equipment arranged along a transmission path between a client terminal and at least one server, said network equipment being configured to receive a request from the client terminal for a first representation of a segment of a multimedia content available at several representations, said request further specifying one or several alternative representations of said segment.

According to the invention, said network equipment comprises:
- a bandwidth estimator configured to determine at least one downstream bandwidth along a transmission path between a server and the client terminal;
- a filtering module configured to modify said request by removing each alternative representation of the request whose associated bitrate is higher than the sum of the determined downstream bandwidth and a threshold;
- a communication module configured to forward the modified request to an upstream network element arranged between the network equipment and the server.

In an aspect of the invention, the bandwidth estimator may be configured to determine a downstream bandwidth along a transmission path between said upstream network element and the network equipment.

As a variant or as a complement, the bandwidth estimator may be configured to determine a downstream bandwidth along a transmission path between the network equipment and a downstream network element arranged between the client terminal and said network equipment.

In addition, the network equipment can be a gateway, a proxy or a cache.

Moreover, the network equipment may be an HTTP Adaptive Streaming aware equipment.

The present invention further concerns a computer program product downloadable from a communication network and/or recorded on a medium readable by computer and/or executable by a processor, comprising program code instructions for implementing the steps of the above mentioned method.

In addition, the present invention also concerns a non-transitory computer readable medium comprising a computer program product recorded thereon and capable of being run by a processor, including program code instructions for implementing the steps of the method previously described.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### BRIEF DESCRIPTION OF THE DRAWINGS

The invention will be better understood and illustrated by means of the following embodiment and execution examples, in no way limitative, with reference to the appended figures on which:
- Figure 1 is a schematic diagram of a Client-Server network architecture wherein the present invention might be implemented;
- Figure 2 is a block diagram of an example of a client terminal according to a first embodiment of the present invention;
- Figure 3 is a block diagram of an example of a gateway according to the first embodiment of the present invention;
- Figure 4 is a flow chart illustrating the method for operating the gateway of the Figure 3, according to the first embodiment;
- Figure 5 is a block diagram of an example of a smart cache according to a second embodiment of the present invention.

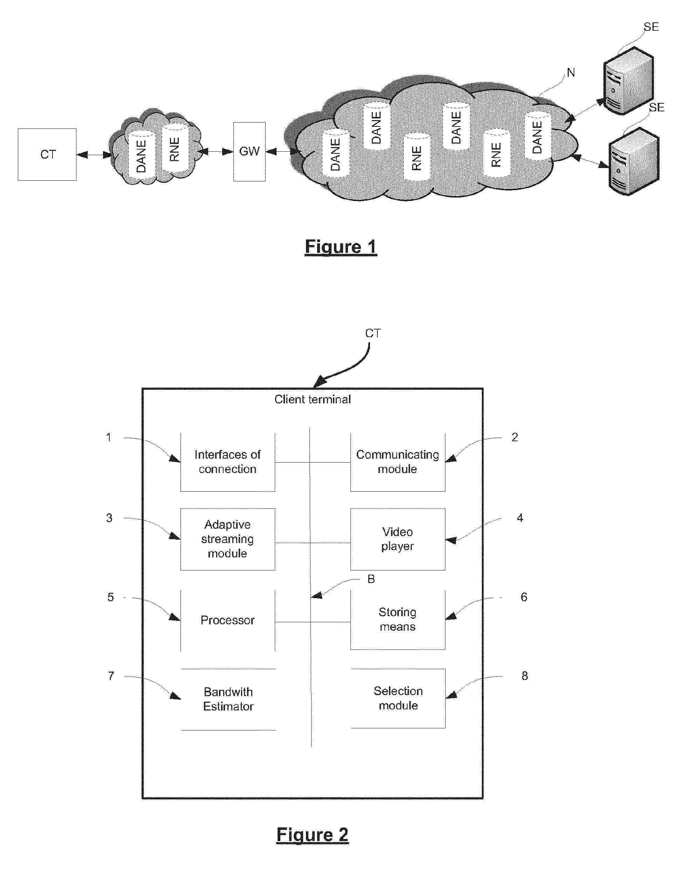

In Figures 1 to 5, the represented blocks are purely functional entities, which do not necessarily correspond to physically separate entities. Namely, they could be developed in the form of software, hardware, or be implemented in one or several integrated circuits, comprising one or more processors.

Wherever possible, the same reference numerals will be used throughout the figures to refer to the same or like parts.

### DESCRIPTION OF EMBODIMENTS

It is to be understood that the figures and descriptions of the present invention have been simplified to illustrate elements that are relevant for a clear understanding of the present invention, while eliminating, for purposes of clarity, many other elements found in typical digital multimedia content delivery methods and systems.

According to a preferred embodiment, the present invention is depicted with regard to the HTTP adaptive streaming protocol (or HAS) and, in particular, with regard to MPEG-DASH. Naturally, the invention is not restricted to such a particular environment and other adaptive streaming protocol could of course be considered and implemented.

As depicted in Figure 1, the Client-Server network architecture -wherein the present invention might be implemented - comprises for example a client terminal CT, a gateway GW, one or more HTTP servers S (only one is represented on Figure 1), a plurality of smart caches DANE and one or more legacy caches RNE. Obviously, additional client terminals may be present in said architecture.

According to DASH, such servers SE are also named Media Origin. They generate for instance the media presentation description (or MPD), so called manifest. This is the source of content distribution: the multimedia content may come from some external entity and be converted to HAS format at the Media Origin.

The client terminal CT - which is an HTTP adaptive streaming (HAS) client terminal connected to the gateway GW through a local network N1 (as a home network or an enterprise network) - wants to connect to a HTTP server SE through a broadband network N2 (as the Internet network). The local network N1 is connected to the broadband network N2 thanks to the gateway GW.

In addition, a smart cache DANE is a caching element in the network N1 or N2 that is configured to understand that a HAS content is delivered. Using MPEG-DASH terminology, a smart cache is considered as DASH Aware Network Element (DANE).

A legacy cache RNE is a caching element in the network N1 or N2 which has no knowledge of the type of data that transits through it, or at least it does not understand the HAS aspects. In MPEG-DASH terminology, a legacy cache is considered as Regular Network Element (RNE).

The client terminal CT wishes to obtain a multimedia content from one of the HTTP servers SE. Said multimedia content is divided into a plurality of segments. It is assumed that the multimedia content is available at different representations at a server SE. The HTTP server SE is able to stream segments to the client terminal CT, upon the client request, using HTTP adaptive streaming protocol over one or more TCP/IP connections.

The client terminal CT can be a portable media device, a mobile phone, a tablet or a laptop, a TV set, a Set Top Box, a game device or an integrated circuit. Naturally, the client terminal CT might not comprise a complete video player, but only some sub-elements such as the ones for demultiplexing and decoding the media content and might rely upon an external means to display the decoded content to the end user. In this case, the client terminal CT is a HAS aware video decoder, such as a set-top box.

As shown in Figure 2, the client terminal CT comprises at least:
- one or more interfaces of connection 1 (wired and/or wireless, as for example Wi-Fi, Ethernet, ADSL, Cable, Mobile and/or Broadcast (e.g. DVB, ATSC) interface);
- a communication module 2 containing the protocol stacks to communicate to the HTTP server SE. In particular the communication module 2 comprises the TCP/IP stack well known in the art. Of course, it could be any other type of network and/or communicating means enabling the client terminal CT to communicate to the HTTP server SE;
- an adaptive streaming module 3 which receives the HTTP streaming multimedia content from the HTTP server SE. It continually selects the segment at the bit rate that better matches the network constraints and its own constraints;
- a video player 4 adapted to decode and render the multimedia content;
- one or more processors 5 for executing the applications and programs stored in a non-volatile memory of the client terminal CT;
- storing means 6, such as a volatile memory, for buffering the segments received from the HTTP server SE before their transmission to the video player 4;
- a bandwidth estimator 7 configured for estimating the bandwidth of the transmission path;
- a selection module 8 configured for determining a set of allowable representations the client terminal CT might request. The allowable representations are selected among the available representations of a given segment of the multimedia content, as listed in the associated manifest. In particular, the determination - by the module 8 - of the set of allowable representations of the given segment can be based on one or several performance criteria (as for instance the bandwidth estimated, capabilities of the client terminal, representation of the previously requested segment, quality of experience required by an end user of the client terminal CT, etc.);
- an internal bus B to connect the various modules and all means well known to the skilled in the art for performing the generic client terminal functionalities.

In the following, it is assumed that a given client terminal CT sends a request on the network N1 to obtain a given segment of a multimedia content. Said request specifies a first representation and one or more alternative representations of said given segment, which are browsed in order of preference when the first representation is not available at a smart cache DANE receiving the request.

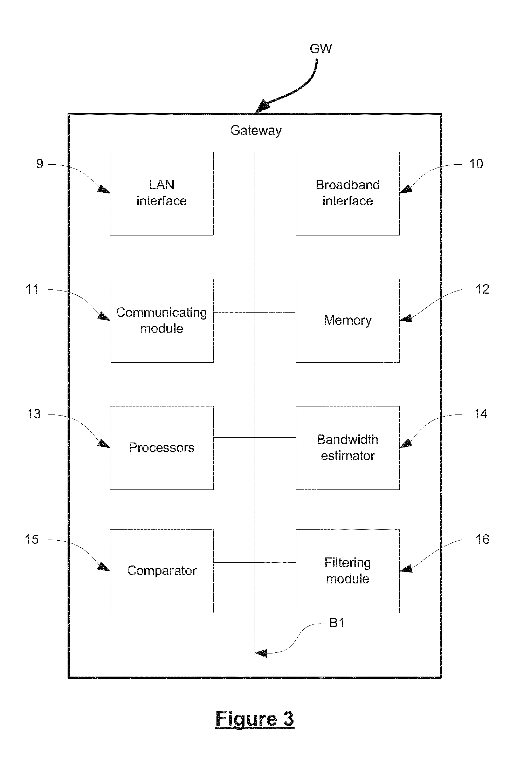

As shown in Figure 3, the gateway GW of the first embodiment - implementing the present invention - is a Digital Subscriber Line (DSL) gateway, providing an Internet broadband access to the local network N1 through the DSL technology. Of course, the gateway could be any type of broadband gateway such as cable, fiber or wireless.

As illustrated in Figure 3, the gateway GW comprises:
- a LAN interface of connection 9 (wired and/or wireless, as for example Wi-Fi, Ethernet, etc.) to the local network N1;
- a broadband interface of connection 10 (wired and/or wireless) to the broadband network N2; and
- a communication module 11 comprising the protocol stacks to communicate through the interfaces of connection 9 and 10. In particular, the communication module comprises an Internet Protocol stack, noted IP stack;
- a memory 12, notably adapted to store information extracted from the manifest (playlist or XML files for instance);
- one or more processor(s) 13 for executing the applications and programs stored in a non-volatile memory of the gateway GW;
- an internal bus B1 to connect the various modules and processing means, routing and bridging means and all means well known to the skilled in the art for performing the generic residential gateway functionalities.

According to the first embodiment, the gateway GW further comprises:
- a bandwidth estimator 14 configured to determine a first downstream bandwidth along a first transmission path between:
   ■ an upstream network element (such as a smart cache DANE, a legacy cache RNE, the server SE), arranged between the server SE and the gateway GW; and
   ■ the gateway GW;
- a comparator 15 which is configured to compare a bitrate associated with each alternative representation of the segment specified in the request of the client terminal CT with the sum of the first downstream bandwidth (determined by the module 14) and a first threshold (which may be null or different from zero, such as equal to 10% of the first downstream bandwidth);
- a filtering module 16 which is configured to modify the request received from the client terminal CT by removing each alternative representation of the request whose associated bitrate is higher than the sum of the first downstream bandwidth and the first threshold. The filtering module 16 receives such information from the comparator 15. In a variant, the comparator 15 may be integrated within the filtering module 16.

According to the first embodiment, the communication module 11 of the gateway GW is further configured to forward the modified request to the next upstream network element (e.g. a smart cache DANE, a legacy cache RNE, the server SE).

In a refinement of the first embodiment, the bandwidth estimator 14 of the gateway GW is further configured to determine a second downstream bandwidth along the transmission path between the gateway GW and a downstream network element (such as the client terminal CT; a legacy cache RNE or a smart cache DANE arranged between the client terminal CT and the gateway GW). Naturally, the determination of the second downstream bandwidth may be performed by a module different from the bandwidth estimator 14.

In addition, according to said refinement, the filtering module 15 is further configured to modify the request received from the client terminal CT by removing each alternative representation of the request whose associated bitrate is higher than the sum of the second downstream bandwidth and a second threshold (which may be null or different from zero, such as equal to 10% of the second downstream bandwidth). The first threshold may be identical with the second threshold. Naturally, they might be different.

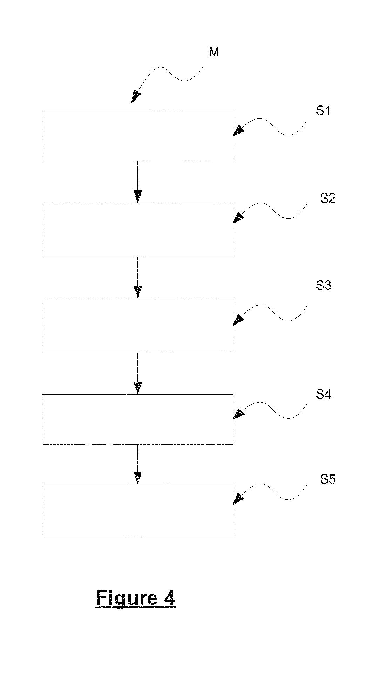

As illustrated in Figure 4, according to said first embodiment, the gateway GW is configured to implement the following mechanism M :
- receiving (step S1), from the client terminal CT, an HTTP request for a first representation of the given segment belonging to a set of allowable representations as previously defined. The HTTP request further comprises a list of alternative representations which might be requested in case the first representation is not cached by a smart cache DANE receiving the request;
- determining (step S2) a first downstream bandwidth along a transmission path between an upstream network element as previously described (such as a smart cache DANE or a legacy cache RNE arranged between the server SE and the gateway GW; the server SE) and the gateway GW;
- comparing (step S3) the bitrate associated with each alternative representation of the segment specified in the request with the sum of the first downstream bandwidth and the first threshold;
- modifying (step S4) the request by removing each alternative representation specified in the latter with an associated bitrate higher than the sum of the first downstream bandwidth and the first threshold;
- forwarding (step S5) the modified request to said upstream network element (DANE; RNE; SE).

According to the refinement of the first embodiment, the determining step S2 of the method M can further comprise the determination of a second downstream bandwidth along the transmission path between the gateway GW and a downstream network element as previously defined (such as the client terminal CT; a legacy cache RNE or a smart cache DANE arranged between the client terminal CT and the gateway GW). In addition, the modifying step S4 can further comprise the removal of each alternative representation of the request whose associated bitrate is higher than the sum of the second downstream bandwidth and the second threshold.

Naturally, in a variant of the first embodiment and refinement, the second downstream bandwidth, as above defined, may be substituted for the first downstream and conversely.

The present invention can prevent a smart cache DANE from delivering to the client terminal CT, a response with an alternative representation which may not be delivered in time due to a low downstream bandwidth along a transmission path between said smart cache DANE and the client terminal CT.

In a second embodiment compliant with the present invention, the present invention might be implemented in a smart cache DANE.

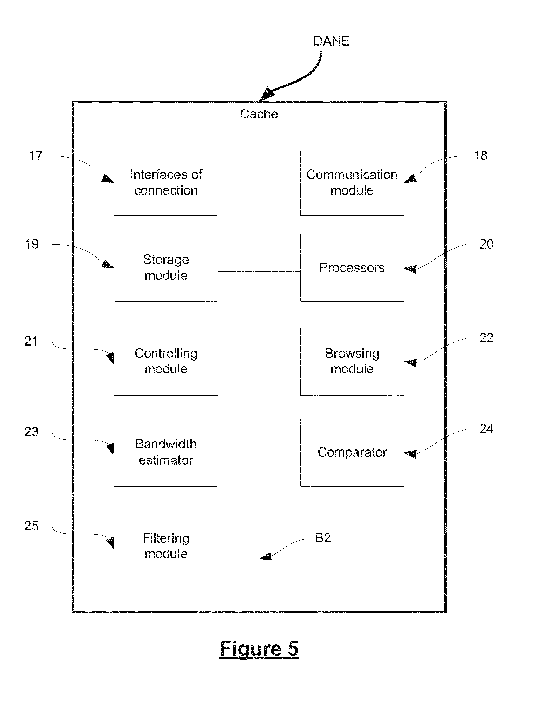

As illustrated in Figure 5, such a smart cache DANE comprises:
- one or more interfaces of connection 17 (wired and/or wireless);
- a communication module 18 comprising the protocol stacks to communicate through the interfaces of connection 1. In particular, the communication module can comprise an Internet Protocol stack, noted IP stack;
- a storage module 19, such as a volatile memory and/or a permanent memory, for storing segments of multimedia contents received from one or more servers SE in order to transmit them to client terminals CT, requesting such multimedia contents;
- one or more processors 20 for executing the applications and programs, for instance, stored in the storage module 19;
- a controlling module 21 formed to check whether or not the smart cache DANE has already cached the first representation of a request (sent by a client terminal CT) requesting a first representation or one alternative representation of a list when the first representation is not cached;
- a browsing module 22 adapted to browse, in order of preference, alternative representations listed in a request sent by a client terminal CT, in case the first representation is not cached. In a variant, the controlling module and the browsing module may define only one module;
- an internal bus B2 to connect the various modules, processing means and all means well known to the skilled in the art for performing the generic residential gateway functionalities.

According to the second embodiment, the smart cache DANE further comprises a bandwidth estimator 23 configured to determine a first downstream bandwidth along a transmission path between an upstream network element (such as another smart cache DANE or a legacy cache RNE located between the gateway GW and the server SE; or the server SE) and the gateway GW.

In addition, the smart cache DANE also comprises:
- a comparator 24 which is configured to compare a bitrate associated with each alternative representation of the segment specified in the request received from the client terminal CT with the sum of the first downstream bandwidth and a first threshold (as previously defined);
- a filtering module 25 which is configured to modify the request of the client terminal CT by removing each alternative representation specified in the request whose the associated bitrate is higher than the sum of the first downstream bandwidth and the first threshold.

The communication module 18 of the smart cache DANE is further configured to deliver the modified request to the next upstream network element (such as another smart cache DANE, a legacy cache RNE, the server SE).

In a refinement of the second embodiment, the bandwidth estimator 23 of the smart cache DANE is further configured to determine a second downstream bandwidth along the transmission path between the smart cache DANE and a downstream network element (such as the client terminal CT; a legacy cache RNE or a smart cache DANE arranged between the client terminal CT and the smart cache DANE). Naturally, the determination of the second downstream bandwidth may be performed by a module different from the bandwidth estimator 23.

In addition, according to said refinement, the filtering module 25 is further configured to modify the request received from the client terminal CT by removing each alternative representation of the request whose associated bitrate is higher than the sum of the second downstream bandwidth and a second threshold (as previously described).

The smart cache DANE is also configured to implement the mechanism M illustrated in Figure 4.

The flowchart and/or block diagrams in the Figures illustrate the configuration, operation and functionality of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a random access memory (RAM); a read-only memory (ROM); an erasable programmable read-only memory (EPROM or Flash memory); a portable compact disc read-only memory (CD-ROM); an optical storage device; a magnetic storage device; or any suitable combination of the foregoing.

## Claims

1. Method for operating a network equipment (GW; DANE) arranged along a transmission path between a client terminal (CT) and at least one server (SE), said network equipment (GW; DANE) being configured to receive a request from the client terminal (CT) for a first representation of a segment of a multimedia content available at several representations, said request further specifying one or several alternative representations of said segment,
**characterized in that** it comprises:
- determining (S2) at least one downstream bandwidth along a transmission path between a server (SE) and the client terminal (CT);
- modifying (S4) said request by removing each alternative representation specified in the request whose associated bitrate is higher than the sum of the determined downstream bandwidth and a threshold;
- forwarding (S5) the modified request to an upstream network element (DANE; RNE; SE) arranged between the network equipment (GW; DANE) and the server (SE).

2. Method according to claim 1, wherein the downstream bandwidth is determined along a transmission path between said upstream network element (DANE; RNE; SE) and the network equipment (GW; DANE).

3. Method according to claim 1, wherein the downstream bandwidth is determined along a transmission path between the network equipment (GW; DANE) and a downstream network element (DANE; RNE; CT) arranged between the client terminal (CT) and said network equipment (GW; DANE).

4. Method according to any one of claims 1 to 3, wherein the network equipment is a gateway (GW), a proxy or a cache (DANE).

5. Method according to any one of claims 1 to 4, wherein, the protocol used for the transmission of the multimedia content to the client terminal (CT) being an HTTP adaptive streaming protocol, the network equipment is compliant with said HTTP adaptive streaming protocol.

6. Network equipment (GW; DANE) arranged along a transmission path between a client terminal (CT) and at least one server (SE), said network equipment (GW; DANE) being configured to receive a request from the client terminal (CT) for a first representation of a segment of a multimedia content available at several representations, said request further specifying one or several alternative representations of said segment,
**characterized in that** it comprises:
- a bandwidth estimator (14; 23) configured to determine at least one downstream bandwidth along a transmission path between a server (SE) and the client terminal (CT);
- a filtering module (16; 25) configured to modify said request by removing each alternative representation of the request whose associated bitrate is higher than the sum of the determined downstream bandwidth and a threshold;
- a communication module (11; 18) configured to forward the modified request to an upstream network element (DANE; RNE; SE) arranged between the network equipment (GW; DANE) and the server (SE).

7. Network equipment according to claim 6, wherein the bandwidth estimator (14; 23) is configured to determine a downstream bandwidth along a transmission path between said upstream network element (DANE; RNE; SE) and the network equipment (GW; DANE).

8. Network equipment according to claim 6, wherein the bandwidth estimator is configured to determine a downstream bandwidth along a transmission path between the network equipment (GW; DANE) and a downstream network element (CT; RNE; DANE) arranged between the client terminal (CT) and said network equipment (GW).

9. Network equipment according to any one of claims 6 to 8, wherein the network equipment is a gateway (GW), a proxy or a cache (DANE).

10. Network equipment according to any one of claims 6 to 9, wherein the network equipment is an HTTP Adaptive Streaming aware equipment.

11. Computer program product downloadable from a communication network and/or recorded on a medium readable by computer and/or executable by a processor, comprising program code instructions for implementing the steps of a method according to at least one of claims 1 to 5.

12. Non-transitory computer-readable medium comprising a computer program product recorded thereon and capable of being run by a processor, including program code instructions for implementing the steps of a method according to at least one of claims 1 to 5.
